(19) Europäisches Patentamt
European Patent Office
Office européen des brevets

(11) EP 0 543 465 B1

(12) **FASCICULE DE BREVET EUROPEEN**

(45) Date de publication et mention de la délivrance du brevet:
**07.07.1999 Bulletin 1999/27**

(51) Int Cl.6: **G11B 7/00**, G11B 7/24, G09F 9/00, G02F 1/00, C09B 57/10

(21) Numéro de dépôt: **92203570.4**

(22) Date de dépôt: **19.11.1992**

(54) **Composés chimiques à transition de spin, milieu à mémoire incluant ces composés pour le stockage, le traitement d'information et/ou l'affichage de données et dispositif incluant un tel milieu**

Chemische Verbindungen mit Spinübergang; Speichermedium, solche Verbindungen enthaltend zur Informationsspeicherung und Informationsverarbeitung und/oder Datenanzeige; sowie Vorrichtung, welche ein solches Medium enthält

Chemical compounds with spin transition, memory element comprising the compounds for information storing and processing and/or data display and device comprising such an element

(84) Etats contractants désignés:
**DE FR GB**

(30) Priorité: **22.11.1991 FR 9114426**

(43) Date de publication de la demande:
**26.05.1993 Bulletin 1993/21**

(73) Titulaires:
- **LABORATOIRES D'ELECTRONIQUE PHILIPS S.A.S.**
  **94450 Limeil-Brévannes (FR)**
  Etats contractants désignés:
  **FR**
- **Koninklijke Philips Electronics N.V.**
  **5621 BA Eindhoven (NL)**
  Etats contractants désignés:
  **DE GB**

(72) Inventeurs:
- **Kahn, Olivier, Société Civile S.P.I.D.**
  **F-75008 Paris (FR)**
- **Jay, Charlotte, Société Civile S.P.I.D.**
  **F-75008 Paris (FR)**
- **Krober, Jonas, Société Civile S.P.I.D.**
  **F-75008 Paris (FR)**

(74) Mandataire: **Landousy, Christian et al**
**Société Civile S.P.I.D.**
**156, Boulevard Haussmann**
**75008 Paris (FR)**

(56) Documents cités:
- **NEW J. CHEM., vol.15, no.2-3, 1991 pages 181 - 190 J. ZAREMBOWITCH ET AL**
- **MATER. RES. SOC. SYMP. PROC., vol.173, 1990 pages 537 - 541 P. CORONEL ET AL**
- **CHEMICAL ABSTRACTS, vol. 114, no. 4, 1991, Columbus, Ohio, US; abstract no. 34747m, & KOORD. KHIM., vol.16, no.5, 1990 pages 654 - 661 L.G. LAVRENOVA ET AL**
- **CHEMICAL ABSTRACTS, vol. 104, no. 24, 1986, Columbus, Ohio, US; abstract no. 218034b, & KOORD. KHIM., vol.12, no.2, 1986 pages 207 - 215 L.G. LAVRENOVA ET AL**
- **ADV. MATER., vol.4, no.11, 1992 pages 718 - 728 O. KAHN ET AL**

EP 0 543 465 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

L'invention concerne des composés chimiques à transition de spin, un milieu à mémoire incluant ces composés pour le stockage, le traitement d'information et/ou l'affichage de données et un dispositif incluant un tel milieu.
Il est déjà connu des composés à transitions de Spin par une publication "Chemical Abstracts, vol.104, N° 24, 1986, Colombus, OH, US ; abrégé 2180346 ; High Temperature Spin Transition in Iron (II) Coordination Compounds with triazoles". Ce document décrit une première famille de composés à transition de spin de formule $FeL_3(NO_3)_2$ où le radical L est un ligand qui est soit un 1, 2, 4 triazole (TP), soit un 4-amino-1,2,4 triazole (ATP), ce ligand étant associé au métal Fe(II) et à l'anion ($NO_3^-$). Ce document décrit une deuxième famille de composés à transition de spin de formule $Fe(ATP)_{2,5}\ Cl_2$, $H_2O$ où le ligand ATP est le 4-amino-1,2,4 triazole, associé au Fe(II) et à l'anion ($Cl^-$). Ce document décrit ensuite une troisième famille de composés à transition de spin de formule $Fe(TP)_2\ Cl_2$ où le ligand est le 1,2,4 triazole (TP) associé au métal Fe(II) et à l'anion ($Cl^-$). Les composés de ces familles ont des transitions de spin avec hystérésis, entre 340 et 350 K, qui dépendent fortement de leur mode de préparation. Ces composés ont aussi des chomophores $FeN_6$ où $FeN_4Cl_2$.
Des composés chimiques à transition de spin et leur utilisation pour le stockage d'informations sont par ailleurs déjà connus de la demande de brevet EP 0 251 043. D'une façon générale, les composés connus pour cette utilisation sont de la famille du $Fe_{II}$, ou du $Co_{II}$, associés à un ligand.
La demande de brevet citée donne comme exemples :

a) [Fe(2-aminomethylpiridine)$_3$] $Cl_2$ ET OH
b) [Fe(1,10-phenantholine)$_2$(NCS)$_2$]
c) [Fe(1-propyltetrazole)$_6$](BF$_4$)$_2$

Pour le stockage d'informations, ces matériaux utilisent l'effet LIESST (de l'anglais : Light Induced Excited Spin-State Trapping). L'effet LIESST est un procédé moléculaire où une transition de spin est induite exclusivement optiquement.
L'utilisation, selon l'effet LIESST, des matériaux connus, suppose l'existence de deux puits de potentiel, l'un correspondant à un état bas spin et l'autre à un état haut spin, séparés par une barrière de potentiel.
A une température inférieure à une température critique Tc de l'ordre de 50 K, l'état bas spin est un état stable. Cela est connu par une publication donnant l'état général de la technique dans ce domaine, intitulée : "Spin-transition molecular systems" par J. Zarembowitch et O. Kahn, dans NEW JOURNAL OF CHEMISTRY, vol.15, 1991, p.181-190. Notamment p.183, cette publication donne l'équation de Gibbs qui s'écrit :

$$\Delta G = G_{HS} - G_{LS} = \Delta H - T.\Delta S,$$

où $\Delta G$ est la différence d'énergie correspondant à la transition de spin d'une quantité donnée d'un matériau,

$\Delta H$ est la différence d'enthalpie,
T la température et
$\Delta S$ la différence d'entropie.

A basse température, le terme d'enthalpie est prépondérant et l'état bas spin est la phase la plus stable c'est-à-dire celle où l'énergie libre de Gibbs est la plus faible.
L'effet LIESST est décrit dans la publication citée p.185, colonne 2. Le composé, d'abord à l'état bas spin stable, est illuminé au moyen d'une radiation de longueur d'onde donnée, par exemple au moyen d'un faisceau laser. Cette illumination induit des états haut spin excités non stables. Ces états se détruisent donc rapidement via des transitions permises, comme il est montré sur la figure 9 de la publication citée, p.185. Les électrons peuvent suivre deux chemins de relaxation. Le premier les fait retomber directement dans le premier puits de potentiel, via des transitions permises, c'est-à-dire à l'état bas spin stable d'origine. L'autre chemin les fait tomber dans le second puits de potentiel correspondant à un état haut spin qui n'est pas stable, mais métastable. En effet, comme le composé se trouve à une température très basse, l'effet d'agitation thermique est faible. Les électrons restent alors piégés dans l'état haut spin métastable pendant un temps suffisamment long pour accumuler l'énergie suffisant à franchir la barrière de potentiel. Après quoi, ils retombent dans le premier puits de potentiel correspondant à l'état bas spin stable. Le temps pendant lequel le système reste dans l'état métastable peut être de l'ordre d'un quart d'heure.
Donc les composés impliquant l'effet LIESST peuvent présenter un effet mémoire utilisable pour le stockage d'informations.
Mais, liés à l'effet LIESST, ces composés présentent dans cette utilisation, plusieurs inconvénients :

- ils ne peuvent être utilisés qu'à très basse température,
- l'effet mémoire est très volatile,
- ils ne présentent pas deux états stables mais un seul, du fait qu'ils ne présentent pas d'hystérésis.

Néanmoins, ils sont inscriptibles et lisibles optiquement, car la transition de spin est accompagnée d'un changement structurel de la molécule, lié à une variation de la distance de liaison métal-ligand. Ce changement d'état de spin se traduit par un changement abrupt de couleur.

Les matériaux connus sont effaçables thermiquement, opération qui se fait spontanément.

Selon l'invention, les inconvénients cités sont évités au moyen de composés chimiques selon la revendication 1.

Notamment, dans une réalisation avantageuse, les composés chimiques sont réalisés selon la revendication 2.

L'invention a aussi pour but de proposer un milieu actif à mémoire, inscriptible, lisible optiquement, effaçable et réinscriptible, utilisable à température ambiante, pour réaliser le stockage, le traitement et/ou l'affichage d'informations.

Selon l'invention ce problème est résolu au moyen d'un milieu actif à mémoire selon la revendication 9.

L'invention est décrite ci-après en détail en référence à la figure 1 qui représente l'enthalpie $\Delta H$ correspondant à la transition de spin d'une quantité donnée d'un matériau, par exemple 1 mole, en fonction de coordonnées atomiques arbitraires, par exemple la distance métal-ligand, et la figure 2 qui représente un cycle d'hystérésis associé à la transition de spin des matériaux sélectionnés.

Pour résoudre le problème du stockage, du traitement et/ou de l'affichage d'informations, un composé, complexe de coordination du $Fe_{(II)}$, du $Fe_{(III)}$ ou du $Co_{(II)}$ est utilisé.

Ce complexe est associé à un mélange de plusieurs ligands qui sont choisis parmi les triazoles substitués (R-Trz) répondant à la formule :

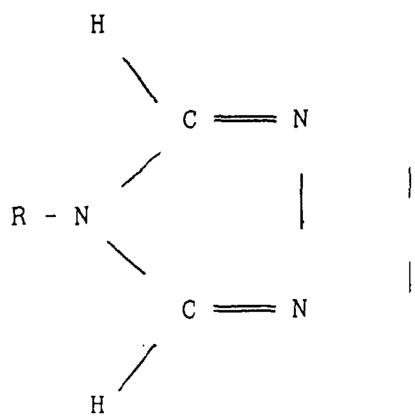

où le radical R est soit un alkyl $C_n H_{2n+1}$ ou H
soit l'amine $NL_2$ où L peut être H ou un alkyl;
et les triazolates ($Trz^-$).

Ce complexe comprend en outre un ou plusieurs anions choisis parmi $BF_4^-$, $ClO_4^-$, $CO_3^{2-}$, $Br^-$, $Cl^-$. Le réseau doit en outre contenir une quantité d'eau définie, mais non ligandée, c'est-à-dire qui ne présente pas de liaison directe avec le métal et qui n'est donc pas dans la molécule. Cette quantité d'eau influe néanmoins sur les ligands triazole car elle agit sur la force de liaison. Elle est indispensable. Pour la maintenir, le réseau contient donc une espèce chimique hygroscopique.

Au départ, comme molécule hygroscopique, on peut choisir Fe $(BF_4)_2$ qui est un précurseur du matériau. En effet, un procédé de réalisation valable consiste à amener en présence d'une part le ligand et d'autre part un sel de fer tel que Fe $(BF_4)_2$ dans une solution acide, de laisser réagir, ce qui produit un précipité, puis de récupérer le produit utile sous forme d'une poudre.

En utilisant dans ce procédé de préparation un excès de Fe $(BF_4)_2$, une quantité définie d'eau est capturée.

Les matériaux sélectionnés selon l'invention, sont des composés qui présentent des transitions de spin induites exclusivement thermiquement. Ces transitions de spin sont accompagnées de modifications électroniques et structurelles des molécules. Ces modifications provoquent un changement abrupt du spectre d'absorption des molécules et donc de la couleur des composés, les transitions entre les niveaux électroniques étant devenues différentes.

Ainsi dans l'état bas spin (LS de l'anglais : Low-Spin) les composés sont pourpre foncé, alors que dans l'état

haut spin (HS de l'anglais : High-Spin) ces composés sont d'un blanc de craie. Aussi, le contraste entre les couleurs des composés dans chacun des états de spin (LS ou HS) est très grand.

Ce phénomène macroscopique est donc facilement décelable, car la dynamique du signal optique lié à la variation abrupte de couleur, lors d'une transition de spin est très grande.

L'avantage est que les variations de ce signal optique peuvent être détectées par un système de détection de faible sensibilité, donc peu coûteux et facile à mettre en oeuvre.

Les composés sélectionnés présentent, en relation avec ces transitions de spin, de nombreuses autres propriétés avantageuses.

Chacun des états de spin (LS ou HS) est un état parfaitement stable et ceci à température ambiante. Des échantillons formés dans l'un et l'autre état sont maintenus à ce jour à température ambiante depuis des mois, sans montrer aucun signe d'altération. Les deux états (LS et HS) sont stables de façon concommittente.

L'étude approfondie de ces matériaux a montré qu'ils présentaient lors des transitions de spin un effet retard, dû à la coopérativité intermoléculaire, d'où il résultait un phénomène d'hystérésis qui selon le matériau choisi pouvait aller de quelques degrés Celsius à plusieurs dizaines de degrés Celsius, entre - 20 et 100°C, c'est-à-dire dans un domaine de température approprié aux applications industrielles.

Du fait de la coopérativité, lors de l'application d'une perturbation thermique,il se produit que :

- ou bien toutes les molécules transitent en même temps,
- ou bien aucune ne transite.

Ces propriétés sont donc complètement différentes de celles des matériaux connus de l'état de la technique.

En effet, pour ces derniers, les transitions de spin étaient induites exclusivement optiquement de LS à HS et thermiquement de HS à LS ; elles n'étaient pas associées à un phénomène d'hystérésis ; seuls existaient un état stable (LS) et un état métastable (HS) qui ne pouvaient être concommittents qu'à très basse température.

Les matériaux sélectionnés selon l'invention présentent des transitions de spin induites exclusivement thermiquement, aussi bien pour la transition de LS à HS que pour la transition de HS à LS ; ces transitions sont associées à un phénomène d'hystérésis ; les deux états HS et LS sont parfaitement stables de façon concommittente à température ambiante.

Aussi, les composés sélectionnés selon l'invention peuvent agir comme des matériaux à mémoire, inscriptibles et effaçables thermiquement, lisibles optiquement, et donc être utilisés aussi bien pour le stockage d'informations, pour le traitement d'informations ou pour l'affichage d'informations.

Pour l'adressage thermique, il peut être utilisé par exemple un faisceau laser infrarouge ou bien laser visible tel que Ar ou He Ne. La résolution du point d'information est alors celle du faisceau laser utilisé. Il peut également être utilisé un faisceau électronique qui assure alors une définition ≤ 100 nm.

L'effacement peut être global par refroidissement au-dessous de la température de transition de l'état bas spin. L'effacement peut également être partiel. Des éléments Peltier localisés peuvent à cet égard être utilisés avantageusement.

La lecture optique peut être effectuée aussi bien en transmission qu'en réflexion. Ce choix ne dépend que du support utilisé pour le matériau à transition de spin sélectionné. Par exemple pour la lecture optique, une (ou des) barrette(s) de CCD ou de diodes peuvent être utilisées. Avec les matériaux exemplifiés, la lecture se fait dans le domaine visible.

C'est pourquoi les matériaux exemplifiés peuvent aussi être utilisés pour l'affichage d'informations directement sur un écran de visualisation. L'écran aura alors un fond sombre, de la couleur pourpre foncé des matériaux à l'état bas spin (LS). L'affichage se fera en blanc très franc sur ce fond sombre.

Les composés sélectionnés peuvent ainsi trouver leur application dans des produits de remplacement des cristaux liquides, avec l'avantage très appréciable que selon le support utilisé, le produit obtenu pour former un écran sera beaucoup moins fragile que les produits à cristaux liquides, et montrera en outre un contraste beaucoup plus grand. Le produit pourra former des surfaces beaucoup plus grandes que les cristaux liquides. Ceci est un des avantages extrêmement important sur les cristaux liquides. Le produit selon l'invention n'est pas fragile et ne met pas en oeuvre de technologie minutieuse. Par exemple, seulement le dépôt de poudres. Alors que les cristaux liquides nécessitent la mise en oeuvre d'un condensateur, voir d'un transistor par pixel.

L'avantage des produits selon l'invention réside aussi dans leur stabilité : une fois stabilisé dans la zone d'hystéresis, le matériau peut garder son adressage indéfiniment sans apport énergétique et sans raffraîchissement du signal.

Le composé sélectionné, préalablement réduit en poudre peut être déposé sur un support par diverses méthodes.

Notamment, il peut être déposé sur un support solide, par pulvérisation, ou bien par sérigraphie, ou bien encore, il peut être incorporé dans une résine et déposé sur un tel support par une méthode dite "à la tournette", voire

même déposé en poudre et collé sur une résine dont les propriétés de collage changent après irradiation, technique aussi appelée "phototacky".

Le support peut être en verre, en polymère du type PPMA, ou polycarbonate, ou PV, ou céramique.

Le composé sélectionné peut encore être incorporé directement dans une matrice, par exemple de type polymère.

La figure 1 représente donc en fonction de coordonnées atomiques arbitraires, qui peuvent être par exemple la distance D métal-ligand, la variation d'enthalpie $\Delta H$ liée à l'équation de Gibbs :

$$\Delta G = G_{HS} - G_{LS} = \Delta H - T.\Delta S,$$

où

$\Delta H$ est la différence d'enthalpie,
T la température,
$\Delta S$ la différence d'entropie.
$\Delta G$ est la différence des énergies libres de Gibbs liées aux états HS et LS.

La transition de spin des matériaux selon l'invention suppose l'existence de deux puits de potentiel, l'un correspondant à l'état bas spin LS (voir la figure 1), l'autre correspondant à l'état haut spin HS. Ces puits de potentiel sont séparés par une barrière de potentiel. Le bas des puits de potentiel correspond respectivement aux niveaux d'énergie $H_{LS}$ et $H_{HS}$. L'énergie relative à la barrière de potentiel est notée $H_B$.

La différence d'énergie entre les bas des deux puits de potentiel est la variation $\Delta H$ liée à l'énergie de Gibbs donnée plus haut.

Par application d'une perturbation thermique à l'un des composés sélectionnés, d'abord placé dans l'état stable bas spin (LS), où les électrons sont piégés dans le premier puits de potentiel, des états haut spin excités non-stables sont induits, puis les électrons retombent via des transitions permises en suivant une voie de relaxation principale qui est celle du second puits de potentiel correspondant à un état haut spin parfaitement stable dans la gamme des température ambiantes. Les électrons restent piégés dans le second puits de potentiel correspondant à HS et ne retournent pas spontanément dans le premier puits de potentiel correspondant à LS du fait du phénomène d'hystérésis. Pour retrouver cet état LS, il est nécessaire, non pas de chauffer comme il était connu de l'état de la technique, mais au contraire de refroidir le composé au-delà du domaine d'hystérésis.

La figure 2 montre un tel cycle d'hystérésis. La fraction molaire X de matériau ayant transité à une température T est portée en ordonnée et la température T en abscisse.

La stabilité de chacune des phase LS et HS est fixée par cette différence $\Delta G$ d'énergie libre de Gibbs qui correspond à la conversion de spin d'une quantité donnée du matériau, par exemple 1 mole. Il est donc très important de prendre en compte les valeurs relatives des termes $\Delta H$ et $T\Delta S$.

Comme on l'a dit précédemment, les conditions thermodynamiques ont été choisies pour que les composés sélectionnés et exemplifiés montrent deux états stables à température ambiante. A cette température, à la différence de ce qui était connu de l'état de la technique, le terme d'entropie $T\Delta S$ de la formule de Gibbs, peut devenir non négligeable dans certaines conditions thermodynamiques. Il faut d'abord noter, en référence avec la formule de Gibbs et avec la figure 1, que plus le terme $\Delta G$ est grand, et plus il est négatif, plus les phénomènes liés à une transition de spin ont des possibilités de se produire.

Le terme d'entropie $T\Delta S$ joue donc un rôle important dans le phénomène utilisé pour mettre en oeuvre l'invention. Il implique une participation d'un terme de dégénérescence de spin, et une participation d'un terme de réseau.

Le terme de dégénérescence de spin se réfère à la dégénérescence des états atomiques. Le terme de dégénérescence est donné par la formule :

$$2s + 1$$

où s est la valeur de spin. Le terme de dégénérescence varie de 1 à 5.

La variation d'entropie $\Delta S$ est donc d'autant plus grande que l'état de spin s est plus grand. En effet, le terme $\Delta S$ est donné par la relation :

$$\Delta S = Rl_n \frac{(2s+1)\ (HS)}{(2s+1)\ (LS)}$$

où R est la constante des gaz parfaits.

Dans le cas où le composé est un complexe du $Fe_{II}$,

s = 0 pourl'état LS et s = 2 pour l'état HS.

Dans le cas où le composé est un complexe du $Fe_{III}$,

s = 1/2 pour l'état LS et s = 5/2 pourl'état HS.

Dans le cas où le composé est un complexe du $Co_{II}$,

s = 1/2 pour l'état LS et s = 3/2 pour l'état HS.

Il en résulte que les complexes du $Fe_{II}$ sont particulièrement intéressants.

D'autre part, le terme de réseau résulte quant à lui de la participation d'un terme de désordre thermique qui est une fonction de la température T, et d'un terme de structure ou d'ordre.

Par exemple, un composé présentant des ponts liants entre noyaux métalliques impliquera l'existence d'un facteur d'ordre à courte distance.

Tous ces facteurs jouent un rôle prépondérant dans l'existence de transitions de spin dans un domaine de température donné, et la fixation d'un compromis entre leurs valeurs permet d'obtenir les résultats voulus, c'est-à-dire :

- un contraste optique entre l'état bas spin et haut spin correct,
- l'amélioration de la stabilité dans chacun des états haut spin et bas spin,
- une température critique Tc à température ambiante,
- une largeur $\Delta T$ du cycle d'hystérésis suffisante, (voir la figure 2).

La connaissance de ces paramètres permet donc d'orienter l'homme du métier vers le choix du composé chimique à transition de spin le mieux adapté à l'application envisagée.

Ainsi, lorsque l'entropie $\Delta S$ diminue, il faut savoir que l'on stabilise l'état LS dans des températures T de plus en plus élevées. Donc, on augmente la température critique Tc (voir figure 2).

D'autre part, plus la coopérativité, dans un complexe, est grande, plus l'effet retard est grand, et plus le phénomène d'hystérésis sera important, c'est-à-dire $\Delta T$ sur la figure 2.

Par ailleurs, plus la différence entre les 2 états de spin est grande, plus l'effet magnétique lié à la transition de spin est détectable. Et plus le terme d'entropie $\Delta S$ augmente, donc plus la température de transition est faible (NB : le terme à considérer T x $\Delta S$).

D'un autre côté, plus la dégénérescence est faible, moins l'effet magnétique lié à la transition de spin est détectable car la différence d'états magnétiques est faible.

Le compromis doit donc être trouvé entre un terme de dégénérescence suffisamment grand pour impliquer un effet de spin décelable, et pas trop grand pour rester dans un domaine de températures ambiantes, seules susceptibles d'applications industrielles.

En outre, en induisant l'ordre dans la structure par la création de ponts liants entre noyaux métalliques, assuré par un ligand commun aux deux ions métalliques (ordre à courte distance), on voit diminuer le terme d'entropie $\Delta S$, l'état thermique a alors moins d'influence sur les transitions de spin et la stabilité de l'état LS à des températures élevées est favorisée.

D'une manière générale, les composés sélectionnés selon l'invention, présenteront, pour l'établissement du phénomène de transition de spin dans le domaine des températures ambiantes :

- au moins un ligand triazole,
- de préférence entre 3 et 6 ligands,
- un mélange de ligands.

TABLEAU I

| Produit N° | | 1* | 2* | 3 | 4 |
|---|---|---|---|---|---|
| Ligand du composé | Etat de la technique Tetrazole | Aminotriazole $NH_2$-TRZ | Aminotriazole $NH_2$-TRZ | Triazole-Triazolate H-TRZ, $TRZ^-$ | Triazole H-TRZ, H-TRZ |
| N | 6 | 3 à 5 | 3 à 5 | 3 à 5 | 3 à 5 |
| R | Propyl | $NH_2$ | $NH_2$ | H | H |
| A | $BF_4^-$ | $BF_4^-$ | $Br^-$ | $BF_4^-$ | $BF_4^-$ |
| Tc | - 160°C | - 20°C | + 30°C | + 70°C | + 40°C |

TABLEAU I (suite)

| Produit N° | | 1* | 2* | 3 | 4 |
|---|---|---|---|---|---|
| Ligand du composé | Etat de la technique Tetrazole | Aminotriazole $NH_2$-TRZ | Aminotriazole $NH_2$-TRZ | Triazole-Triazolate H-TRZ, $TRZ^-$ | Triazole H-TRZ, H-TRZ |
| ΔT | | ≈ 10°C | ≈ 15°C | ≈ 40°C | ≈ 30°C |
| exemples comparatifs | | | | | |

Le tableau I donne des exemples des températures critiques Tc du cycle d'hystérésis et de l'ampleur de l'hystérésis ΔT que l'on peut attendre en fonction de différents ligands.

Dans ce tableau, les composés ont un nombre de ligands inférieur à 6. Les produits testés sont numérotés de 1 à 4.

Les résultats du tableau I doivent être comparés avec ceux qui sont obtenus au moyen des composés connus de l'état de la technique et qui incluaient un propyl tetrazole. La température Tc était alors de - 160°C (110 K).

Pour ajuster la température moyenne du phénomène d'hystérésis, selon l'invention on réalise un mélange de matériaux. En particulier, de préférence, on utilise comme matériau de base un matériau dit haute température, par exemple en référence avec le tableau I, le produit N° 3 dont la température moyenne du phénomène d'hystérésis, ou température critique, est Tc ≃ 70°C. Et dans ce cas, au moment de la synthèse du ligand, ici triazole - triazolate, on ajoute une quantité très petite, par exemple inférieure à 1 % en mole d'un ligand dans ce cas un amino-triazole d'habitude associé à un produit, par exemple le produit N° 1, dit basse température, qui correspond d'habitude à une température critique Tc ≃ - 20°C, et on réalise ce mélange du ligand majoritaire ici triazole - triazolate et de l'autre ligand ici un amino-triazole en très faible quantité définie plus haut.

On continue la mise en oeuvre du procédé de préparation du matériau par la mise en présence avec le sel de fer, comme précédemment, et on obtient un précipité d'où on tire une poudre.

Par ce procédé de préparation incluant deux ligands différents dans les proportions préconisées, on obtient un matériau pour lequel la température moyenne du phénomène d'hystérésis est 25 ≤ Tc ≤ 35°C et l'hystérésis 5°C ≤ ΔT ≤ 15°C.

D'une manière générale, pour ajuster la température moyenne Tc du phénomène d'hystérésis, on introduit, dans un matériau ayant une température Tc plus haute que la température Tc voulue, un désordre contrôlé. Ceci est effectué, en ajoutant une très petite quantité d'élément paramagnétique à un produit montrant un effet magnétique.

Ainsi quand l'amino-triazole vire à basse température, son spin moléculaire produit des petits dipoles magnétiques qui viennent "encourager" le matériau haute température à virer aussi à basse température.

Le tableau II montre les caractéristiques du produit N° 5 ayant le mélange de ligands décrit précédemment.

TABLEAU II

| Produit N° 5 | |
|---|---|
| Ligand | H.TRZ-$TRZ^-$ ≥ 99 % $NH_2$-TRZ ≤ 1 % |
| N | 3 - 5 |
| R | $NH_2$ + H |
| A | $BF_4$ |
| Tc | 20 à 25° C |
| ΔT | 10 à 20° C |

Par HTRZ on entend un Triazole avec R = H, par $NH_2$-TRZ, on entend aminotriazole et par $TRZ^-$, on entend un triazolate, c'est-à-dire dépourvu de radical R.

Le mélange préconisé ici pour obtenir le produit N° 5 se fait donc à partir du produit N° 3 du tableau I, dit à ligand triazole-triazolate, pour l'obtention duquel on a en premier déjà réalisé un mélange de ligands sur toutes les molécules. C'est-à-dire que pour chaque ion Fe, on a la présence de 2 triazoles (H-TRZ) et de 1 triazolate ($TRZ^-$). Ce matériau est parfaitement défini et a une formule homogène.

Le mélange préconisé entre ce produit N° 3 du tableau I, incluant un ligand triazole-triazolate, et un ligand aminotriazole correspondant au produit N° 1, résulte en ce produit N° 5 dit à ligand triazole-triazolate-aminotriazole dans lequel la majorité des molécules est du type triazole-triazolate, et dans lequel on trouve quelques noyaux Fe ligandés

soit avec 3 aminotriazoles,
soit avec 1 ou 2 aminotriazoles, le reste des ligands étant triazole.

Il est apparu à l'usage un problème technique supplémentaire qui consiste dans le fait que les produits, dans leur forme blanche, peuvent jaunir à la longue. Cela est dû au fait qu'il peut exister un excès de fer tel que la présence de Fe $(BF_4)_2$ dans le produit utile. En effet, le fer $Fe^{2+}$ non ligandé a tendance à s'oxyder en présence d'eau en $Fe^{3+}$.
La couleur blanche est stabilisée si on évite qu'un tel excès de fer soit présent dans le produit final. Ce résultat est obtenu en introduisant, lors de la mise en oeuvre du procédé de préparation, un sel incolore soluble, non ou peu basique, hygroscopique, par exemple du perchlorate de potassium ou de magnésium [$K\,ClO_4$ *ou* $Mg\,(ClO_4)_2$] ou du perchlorate de sodium [$Na\,ClO_4$].
Par ce procédé incluant des perchlorates, on garde toutes les propriétés du produit, et en outre, on n'est pas pénalisé par l'excès de fer. Donc le produit conserve indéfiniment un blanc parfaitement pur, même en présence d'eau.
Un procédé pour réaliser un système d'affichage au moyen des milieux comprenant les composés sélectionnés selon l'invention est proposé ci-après à titre d'exemple.

**a) Partie active** - Le milieu incluant les composés (à transition de spin)

La réalisation d'un dispositif d'affichage comprend d'abord la réalisation du milieu constitué par le matériau à transition de spin sélectionné, déposé sur un support, selon une méthode décrite précédemment par exemple. Le milieu ainsi réalisé peut être une plaque de toute forme périphérique, carrée, rectangulaire, polygône, ou circulaire, ovale, etc, et de toutes dimensions. Notamment de très grandes aussi bien que de très petites dimensions peuvent être envisagées. Le support pourra être choisi rigide ou souple. De plus, un grand nombre de matériaux non cassants et de faibles coûts se prête très bien au rôle de support pour les composés à transition de spin.

**b) Le dispositif d'adressage thermique**

Ce dispositif pourra être du type

- crayon chauffant, par exemple un faisceau laser infrarouge, ou bien à 520 mm, ou un crayon à chauffage résistif,
- une matrice de plots chauffants résistifs, adressés en x, y. A cet effet on peut prévoir deux réseaux d'électrodes croisées entre elles. Dans une réalisation particulière, le milieu actif peut être disposé entre les deux réseaux d'électrodes, avec un système de dissipation de la chaleur. A cet effet, le milieu actif peut être favorablement déposé en film mince, par exemple par évaporation classique sous vide. Dans une variante, il peut être réalisé par évaporation d'un solvant contenant la poudre de matériau actif. Dans une autre variante le matériau actif peut être enrobé dans une matrice polymérisée transparente et associé à un système de dissipation thermique localisé pour permettre une élévation de température localisée. Favorablement, les électrodes peuvent être transparentes et réalisées par exemple en InSnO (en anglais Indium Tin Oxide).

Ainsi le dispositif peut travailler aussi bien en transmission, qu'en réflexion.
S'il n'est pas indispensable que les électrodes soient transparentes, elles peuvent être en tous métaux classiquement utilisés à cet usage.
L'avantage du dispositif incluant une matrice d'électrodes x,y, est qu'il peut recevoir et afficher des messages, données ou informations, codés en x, y.
Selon l'invention, on peut ainsi appliquer le milieu actif à la réalisation d'un système d'émission-réception avec affichage, ou visualisation du message transmis.

**c) L'effacement**

L'effacement peut être total par refroidissement global, ou bien dans une variante, il peut être partiel en utilisant des éléments Peltier.
Un dispositif d'affichage réalisé au moyen d'un milieu de stockage selon l'invention peut avantageusement être utilisé pour réaliser un écran d'affichage à très bas coût pour une carte à mémoire. Comme on l'a dit précédemment, le milieu de stockage peut inclure un support synthétique et est particulièrement bien adapté à coopérer avec un autre support synthétique. De plus le milieu de stockage peut être extrêmement mince. Son utilisation pour réaliser un écran pouvant afficher les données stockées dans une carte à mémoire est donc particulièrement favorable.
Un tel dispositif d'affichage peut aussi être utilisé dans de nombreux autres dispositifs où la fragilité d'un écran à cristaux liquides est défavorable, notamment pour l'affichage de données concernant le fonctionnement d'appareils électroménagers. Le dispositif d'affichage peut encore être utilisé pour les calculatrices, les appareils audio, vidéo, de

jeux, etc, et notamment les écrans de moniteurs, les écrans d'affichage public, urbain ou d'aéroport, etc. Un tel dispositif d'affichage peut remplacer un grand nombre des applications des cristaux liquides mais n'est pas limité à ces applications du fait qu'il peut être réalisé sur des très grands supports.

Une application du dispositif d'affichage peut être par exemple du type "ardoise magique". ELle utilise un crayon chauffant en combinaison avec un matériau du type référence matériau N°3 dans le tableau I, dont la température Tc $\simeq$ 70 et l'hystérésis $\Delta T \simeq 40°C$. Ce matériau s'écrit Fe $(HTRZ)_2$ $(TRZ^-)(BF_4)_1$. Ce matériau a un temps d'effacement d'environ 30 secondes du fait de sa haute température $T_c$. Une telle ardoise magique pourrait être utilisée pour visualiser les données introduites dans un support de stockage informatique au moyen d'une tablette tactile classique.

## Revendications

1. Composés chimiques à transition de spin, sous forme de poudre, comprenant un réseau avec une molécule formée d'un complexe où un métal choisi parmi le fer ($Fe_{II}$), le fer ($Fe_{III}$), et le cobalt ($CO_{II}$), est associé à un mélange de plusieurs ligands choisis parmi les 1-2-4 triazoles substitués (R-Trz) répondant à la formule :

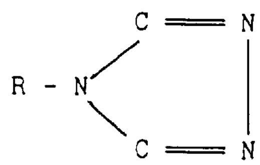

   où R est un radical alkyl ($C_nH_{2n+1}$-) ou H ou amine $NL_2$ où L peut être H ou un alkyl, et les triazolates ($Trz^-$), et où ce métal est associé aussi à anion (A) choisi parmi $BF_4^-$, $ClO_4^-$, $Br^-$, $Cl^-$, $CO_3^{2-}$, et ce réseau comprenant en outre au moins une molécule d'eau ($H_2O$) non ligandée, les ligands du mélange dans la molécule du réseau étant sélectionnés pour que les transitions de spin se produisent exclusivement thermiquement entre deux états de spin stables dans le domaine de la température ambiante, ces transitions de spin étant associées à un phénomène d'hystérésis et accompagnées de modifications électroniques et structurelles des molécules provoquant un changement abrupt du spectre d'absorption des composés dans le visible et donc de sa couleur visible.

2. Composés selon la revendication 1, dans lesquels le mélange de ligands comprend au moins un ligand triazole substitué (R-Trz) où R est une amine $NL_2$ où L peut être H ou un alkyl, ce ligand appelé aminotriazole étant introduit en proportion molaire de l'ordre de ou inférieure à 1% de la proportion molaire totale du mélange de ligands, et cette faible proportion molaire de ce ligand aminotriazole dans le mélange de ligands étant sélectionnée de manière appropriée à contrôler la température critique (Tc) de transition de spin des composées.

3. Composés selon la revendication 2, dans lesquels ledit ligand aminotriazole qui est en faible proportion est le triazole substitué où le radical R est l'amine $H_2N$-.

4. Composés selon la revendication 3, dans lesquels le mélange de ligands comprend au moins un triazole dans la formule duquel le radical R est l'hydrogène H, et au moins un triazolate ($Trz^-$).

5. Composés selon la revendication 4, dans lesquels le mélange de ligands comprend 3 à 5 ligands.

6. Composés selon l'une des revendications 1 à 5, dans lesquels la présence d'au moins une molécule d'eau est assurée par la présence d'une espèce hygroscopique choisie parmi des sels hygroscopiques solubles peu basiques ou non basiques, et incolores.

7. Composés selon la revendication 6, caractérisé en ce que l'espèce hygroscopique est choisie parmi le borofluorure de fer [$Fe(BF_4)_2$] , et/ou le perchlorate de magnésium [$Mg(ClO_4)_2$ , et/ou le perchlorate de potassium [$KClO_4$] et/ou le perchlorate de sodium [$NaClO_4$].

8. Composés selon l'une des revendications 1 à 7, caractérisé en ce que la molécule comprend des liaisons métal-métal.

9. Milieu actif à mémoire, inscriptible thermiquement, lisible optiquement, effaçable et réinscriptible thermiquement,

pour effectuer à température ambiante le stockage, traitement et/ou affichage d'informations, ce milieu comprenant des composés chimiques selon l'une des revendications 1 à 8, associé à un support.

**10.** Milieu actif selon la revendication 9, dans lequel les composés à transition de spin sont appliqués en une ou plusieurs couches sur le support.

**11.** Milieu actif selon la revendication 9, dans lequel les composés à transition de spin sont enrobés dans une matrice polymérisée transparente.

**12.** Dispositif pour le stockage, le traitement et/ou l'affichage d'informations par écriture thermique, lecture optique et effaçage thermique, comprenant un milieu actif à mémoire selon l'une des revendications 9 à 11.

**13.** Dispositif selon la revendication 12, comprenant en outre un système d'adressage thermique appliqué au milieu actif, avec des moyens d'écriture thermique par chauffage localisé et des moyens d'effacement thermique par refroidissement global ou partiel.

**14.** Dispositif selon l'une des revendications 12 ou 13, caractérisé en ce qu'il comprend un système d'adressage codé.

**15.** Dispositif selon l'une des revendications 12 à 14, comprenant des moyens de lecture optique par transmission ou réflexion.

**16.** Dispositif selon l'une des revendications 12 à 15, pour former une ardoise magique.

**17.** Dispositif selon l'une des revendications 12 à 15, pour former un écran de visualisation de données.

**18.** Carte à mémoire avec un dispositif selon la revendication 17.

**Patentansprüche**

**1.** Chemische Verbindungen mit Spinübergang in Pulverform, mit einem Gitter mit einem von einer Komplexverbindung gebildeten Molekül oder mit einem Metall, das aus dem Eisen ($Fe_{II}$), dem Eisen ($Fe_{III}$) und dem Kobalt ($Co_{II}$) gewählt wird, und mit einer Mischung mehrerer Liganden verknüpft wird, die aus den substituierten 1-2-4-Triazolen (R-Trz) der nachstehenden Formel gewählt werden:

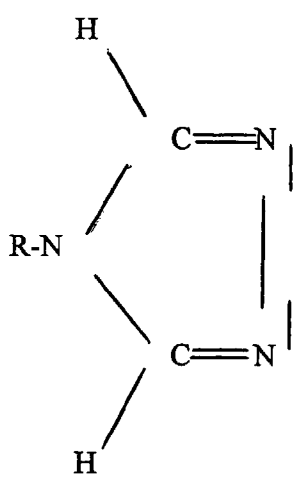

worin R ein Alkyl-Radikal ($C_n H_{2n+1}$) oder H oder ein Amin $NL_2$ ist, worin L H oder ein Alkyl sein kann und die Triazolate ($Trz^-$), und dieses Metall außerdem mit dem Anton (A), gewählt aus $BF4^-$, $ClO_4^-$, $CO_3^{2-}$, $BR^-$, $Cal^-$ verknüpft ist, und dieses Gitter außerdem zumindest ein nicht ligandiertes Wassermolekül ($H_2O$) enthält, wobei die Liganden der Mischung im Molekül des Gitters deshalb gewählt werden, damit die Spinübergänge ausschließlich

thermisch zwischen zwei stabilen Spinzuständen im Bereich der Umgebungstemperatur entstehen, diese Spinübergänge einem Hysteresephänomen zugeordnet sind und von elektronischen und strukturellen Änderungen der Moleküle begleitet werden, die eine sprunghafte Änderung im Absorptionsspektrum der Verbindungen im sichtbaren Gebiet und also in der sichtbaren Farbe auslösen.

**2.** Verbindungen nach Anspruch 1, in denen die Ligandenmischung wenigstens einen substituierten Triazolliganden (R-Trz) enthält, worin R ein Amin $NL_2$ ist und darin L H oder ein Alkyl sein kann, wobei dieser mit Aminotriazol bezeichnete Ligand im Molarverhältnis in der Größenordnung von oder weniger als 1% des Gesamtmolarverhältnisses der Ligandenmischung eingeführt wird, und dieses schwache Molarverhältnis dieses Aminotriazolliganden in der Ligandenmischung zum Steuern der kritischen Temperatur (Tc) des Spinübergangs der Verbindungen auf geeignete Weise gewählt wird.

**3.** Verbindungen nach Anspruch 2, in denen der Aminotriazolligand mit schwachem Verhältnis das substituierte Triazol ist, worin das Radikal R das Amin $H_2N$- ist.

**4.** Verbindungen nach Anspruch 3, in denen die Ligandenmischung wenigstens ein Triazol in der Formel, dessen Radikal der WasserstoffH ist, und wenigstens ein Triazolat ($Trz^-$) enthält.

**5.** Verbindungen nach Anspruch 4, in denen die Ligandenmischung 3 bis 5 Liganden enthält.

**6.** Verbindungen nach einem oder mehreren der Ansprüche 1 bis 5, in denen das Vorhandensein wenigstens eines Wasserstoffmoleküls durch das Vorhandensein eines aus hygroskopischen, löslichen, gering basischen oder nichtbasischen und farblosen Salzen gewählten hygroskopischen Individuums Gewähr geleistet ist.

**7.** Verbindungen nach Anspruch 6, dadurch gekennzeichnet, dass das hygroskopische Individuum aus Eisen-Borfluorid [$Fe(BF_4)_2$] und/oder Magnesiumperchlorat [$Mg(ClO_4)_2$] und/oder Kaliumperchlorat [$KClO_4$] und/oder Natriumperchlorat [$NaClO_4$] gewählt wird.

**8.** Verbindungen nach einem oder mehreren der Ansprüche 1 bis 8, dadurch gekennzeichnet, dass das Molekül Metall-Metall-Verbindungen enthält.

**9.** Aktives thermisch beschreibbares, optisch lesbares, löschbares und thermisch neubeschreibbares Speichermittel zum Durchführen der Speicherung, der Bearbeitung und/oder der Anzeige von Informationen bei Umgebungstemperatur, wobei dieses Mittel auf einem Träger angebrachte chemische Verbindungen nach einem der Ansprüche 1 bis 8 enthält.

**10.** Aktives Mittel nach Anspruch 9, in dem die Verbindungen mit Spinübertrag in einer oder mehreren Schichten auf dem Träger angebracht werden.

**11.** Aktives Mittel nach Anspruch 9, in dem die Verbindungen mit Spinübertrag in eine polymerisierte transparente Matrix aufgenommen werden.

**12.** Anordnung zum Speichern, Bearbeiten und/oder Anzeigen von Informationen durch thermisches Beschriften, optisches Lesen und thermisches Löschen, mit einem aktiven Speichermittel nach einem der Ansprüche 9 bis 11.

**13.** Anordnung nach Anspruch 12, außerdem mit einem an das aktive Mittel angelegten thermischen Adressierungssystem, mit thermischen Beschriftungsmitteln durch örtliche Erwärmung und mit thermischen Löschmitteln durch vollständiges oder teilweises Kühlen.

**14.** Anordnung nach einem der Ansprüche 12 oder 13, dadurch gekennzeichnet, dass sie ein codiertes Adressiersystem enthält.

**15.** Anordnung nach einem der Ansprüche 12 bis 14, mit optischen Lesemitteln durch Transmission oder Reflexion.

**16.** Anordnung nach einem der Ansprüche 12 bis 15 zur Bildung einer magischen Schiefertafel.

**17.** Anordnung nach einem der Ansprüche 12 bis 15 zur Bildung eines Datenvisualisierungsschirms.

**18.** Speicherkarte mit einer Anordnung nach Anspruch 17.

## Claims

**1.** Chemical spin-transition compounds in the form of powders, comprising a lattice with a molecule formed from a complex, in which a metal chosen from the iron ($Fe_{II}$), the iron ($Fe_{III}$) and cobalt ($Co_{II}$) is associated with a mixture of several ligands chosen from the substituted 1-2-4 triazoles (R-Trz), defined by the formula:

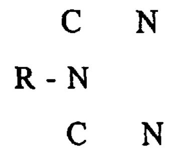

in which the radical R is an alkyl ($C_n H_{2n+1}$-) or H, or amine, and the triazolates ($Trz^-$), and in which this metal is associated with the anions (A) chosen from $BF_4^-$, $ClO_4^-$, $Br^-$, $Cl^-$, $Co_3^{2-}$, and this lattice also comprising at least a non-ligand molecule of water ($H_2O$), the ligands of the mixture in the molecule of the lattice being selected so as to produce exclusively thermal spin transitions between two stable spin states in the ambient temperature range, these spin transitions being associated with a hysteresis phenomenon and accompanied by electronical and structural modifications of the molecules inducing an abrupt change of the absorption spectrum of the compounds in the visible range and thus of its visible color.

**2.** Compounds as claimed in claim 1, wherein the mixture of ligands comprises at least a substituted triazole ligand (R-Trz) in which R is an amine $NL_2$ in which L may be H or an alkyl, this aminotriazole ligand being introduced in a molar ratio of the order of, or less than, 1% of the total molar ratio of the mixture of ligands, and this low molar ratio of this aminotriazole ligand in the mixture of ligands being appropriately chosen to control the critical spin transition temperature (Tc) of the compounds.

**3.** Compounds as claimed in claim 2, wherein said aminotriazole ligand in a low ratio is the substituted triazole in which the radical R is the amine $H_2N$-.

**4.** Compounds as claimed in claim 3, wherein the mixture of ligands comprises at least a triazole, in the formula of which the radical R is hydrogen H, and at least a triazolate ($Trz^-$).

**5.** Compounds as claimed in claim 4, wherein the mixture of ligands comprises 3 to 5 ligands.

**6.** Compounds as claimed in any one of claims 1 to 5, wherein the presence of at least a water molecule is ensured by the presence of a hygroscopic substance chosen from the hygroscopic soluble colourless salts which are non-basic or weakly basic.

**7.** Compounds as claimed in claim 6, characterized in that the hygroscopic substance is chosen from iron boron fluoride [Fe $(BF_4)_2$], and/or magnesium perchlorate [Mg $(Cl\ O_4)_2$] and/or potassium perchlorate [K Cl $O_4$] and/or sodium perchlorate [Na Cl $O_4$].

**8.** Compounds as claimed in any one of claims 1 to 7, characterized in that the molecule comprises metal-metal bonds.

**9.** An active memory medium which is thermally inscribable, optically readable, thermally erasable and reinscribable for storing, processing and/or displaying information at ambient temperature, this medium comprising chemical compounds as claimed in any one of claims 1 to 8, associated with a support.

**10.** An active medium as claimed in claim 9, wherein the spin transition compounds are provided in one or several layers on the support.

**11.** An active medium as claimed in claim 8, wherein the spin transition compounds are coated in a transparent polymerised matrix.

**12.** A device for storing, processing and/or displaying information by way of thermal writing, optical reading and thermal erasure, comprising an active memory medium as claimed in any one of claims 8 to 11.

**13.** A device as claimed in claim 12, also comprising a thermal addressing system applied to the active medium, with means for thermal writing by way of localized heating and means for thermal erasure by way of global or partial cooling.

**14.** A device as claimed in claim 12 or 13, characterized in that it comprises a coded addressing system.

**15.** A device as claimed in any one of claims 12 to 14, comprising means for optical reading in transmission or reflection.

**16.** A device as claimed in any one of claims 12 to 15, for constituting a magic slate.

**17.** A device as claimed in any one of claims 12 to 15, for constituting a data display screen.

**18.** A memory card including a device as claimed in claim 17.

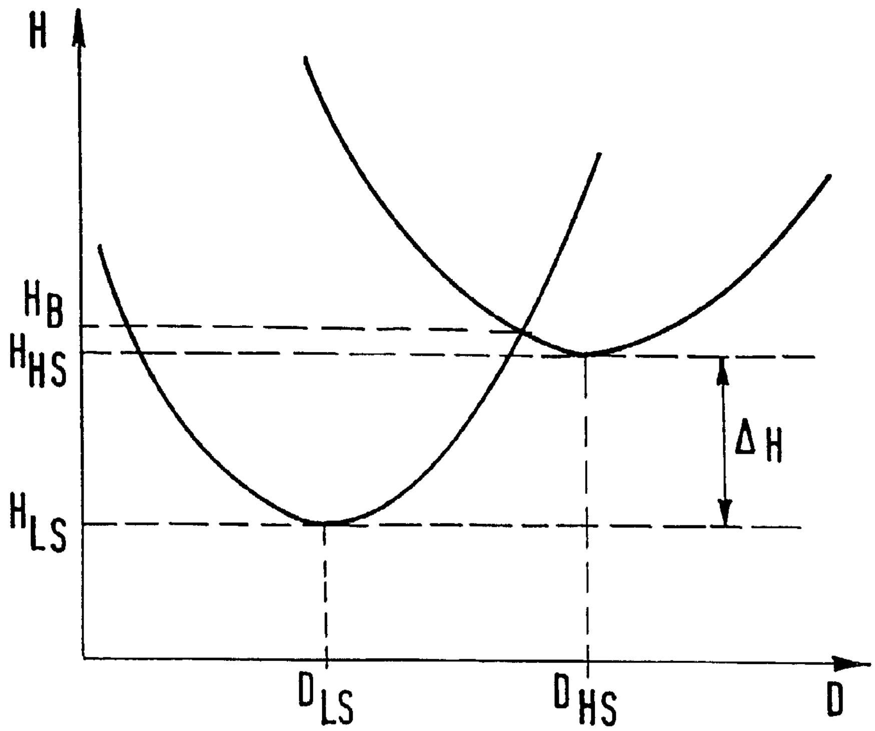


FIG.1

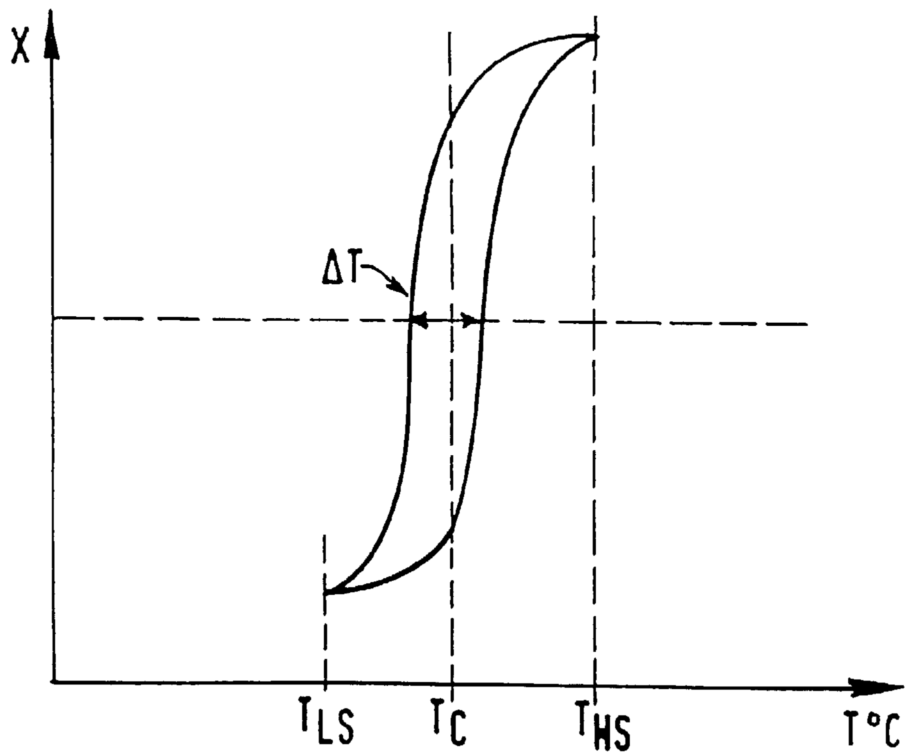


FIG.2